Europäisches Patentamt

European Patent Office

Office européen des brevets

(11) Numéro de publication: **0 409 702 A1**

## DEMANDE DE BREVET EUROPEEN

(21) Numéro de dépôt: **90402022.9**

(22) Date de dépôt: **13.07.90**

(51) Int. Cl.5: **H04N 7/173**, H04N 7/16

(30) Priorité: **17.07.89 FR 8909953**

(43) Date de publication de la demande:
**23.01.91 Bulletin 91/04**

(84) Etats contractants désignés:
**AT BE CH DE DK ES FR GB GR IT LI LU NL SE**

(71) Demandeur: **SOCIETE CIVILE MONIER (S.C.M.)**
**4, Quai de Bercy**

**F-94220 Charenton le Pont(FR)**

(72) Inventeur: **Monier, Bernard**
**10, rue Castellane**
**F-75008 Paris(FR)**

(74) Mandataire: **Marquer, Francis et al**
**Cabinet Moutard 35, Avenue Victor Hugo**
**F-78960 Voisins le Bretonneux(FR)**

(54) **Réseau de distribution par commutation de signaux vidéo avec modules individuels d'amplification, de sélection et de réception de la télécommande.**

(57) Centre de distribution vidéo comportant, pour les différents usagers, des modules individuels indépendants en parallèle sur un bus de distribution.

Chaque module comprend un multiplexeur (200) de sélection des canaux, un amplificateur de ligne (201-202) et un circuit (204) récepteur et décodeur du signal de télécommande de sélection de programme provenant du terminal d'abonné et un circuit logique de commande de sélection relié par un interface logique (206) à un bus informatique, via un bus local de contrôle ($22_1$).

FIG.2

# RESEAU DE DISTRIBUTION PAR COMMUTATION DE SIGNAUX VIDEO AVEC MODULES INDIVIDUELS D'AMPLIFICATION, DE SELECTION ET DE RECEPTION DE LA TELECOMMANDE.

L'invention s'applique à la télédistribution, à N usagers, de signaux vidéo et/ou audio provenant de M sources situées à un noeud d'un réseau câblé de télévision.

Elle concerne plus particulièrement les réseaux de distribution dits à contenu différencié, dans lesquels chaque usager est relié au centre de distribution par un câble individuel qui véhicule le canal sélectionné par l'usager et les signaux de télécommande de la sélection effectuée.

Ce type de réseaux simplifie la réalisation des câbles, qui ne doivent plus véhiculer que des signaux vidéo, à l'exclusion d'une porteuse haute fréquence modulée, permet de remplacer si on le souhaite le téléviseur par un simple moniteur et facilite la gestion et le contrôle de l'accès aux différentes sources d'information.

Dans un réseau de ce type, décrit dans le brevet français No 87 16272, déposé le 24 Novembre 1987, par la Compagnie Générale de Vidéotechnique, la sélection des canaux s'effectue au moyen d'une grille de commutation qui reçoit des ordres de sélection d'un dispositif de transmission d'ordres, lequel reçoit et décode la télécommande de sélection provenant des différents usagers. Ces dispositifs, ainsi que d'ailleurs ceux qui permettent la gestion et le contrôle de l'accès aux différentes sources, sont constitués par un module commun unique utilisant un microprocesseur qui traite séquentiellement les demandes de sélection émanant des différents usagers et effectue la gestion.

De tels modules sont complexes et nécessitent une connectique fragile et coûteuse. Du fait qu'ils sont communs à un grand nombre d'usagers, la souplesse d'implantation et de changement de capacité est réduite.

Pour supprimer ces inconvénients, et assurer à chaque usager une indépendance aussi grande que possible sur le plan de la qualité et de la fiabilité du service, l'invention propose de rassembler en un seul module, de réalisation simple, propre à chaque usager et relié à un bus général de distribution, l'ensemble des fonctions de sélection et d'amplification du signal vidéo, tandis que les fonctions périphériques de contrôle des connexions, de gestion, facturation, et autres, lorsqu'elles sont requises, sont remplies par des équipements communs comportant avantageusement un micro-ordinateur, plus ou moins sophistiqué selon les besoins et reliés aux modules par des bus d'accès spécifiques.

Dans un mode d'exécution préféré de l'invention, le réseau de distribution comprend un certain nombre de sous-ensembles de distribution comprenant chacun un bus vidéo local auquel sont reliés en parallèle N modules du type susvisé desservant chacun un terminal d'abonné, les différents bus vidéo locaux étant connectés en parallèle sur un bus vidéo général et les N modules de chaque sous-ensemble étant reliés par un bus local de contrôle à un bus informatique général luimême relié à un centre de gestion comportant un micro-ordinateur, les modules et ledit centre étant agencés pour permettre l'interrogation par le centre des différents modules afin de déterminer leur statut de connexion, (c'est-à-dire de savoir auxquelles des M sources vidéo ils sont connectés) et, réciproquement, pour permettre au centre d'interdire ou de commander l'accès des abonnés à des sources déterminées et d'effectuer la gestion.

Dans un mode d'exécution plus particulier, dans lequel le terminal d'abonné comprend un récepteur de télévision standard associé à un modulateur UHF/VHF reliable à l'antenne dudit récepteur, ledit modulateur est en outre relié en permanence à l'amplificateur de ligne et ledit terminal comprend des moyens de détecter la présence effective d'un signal vidéo sur la ligne d'abonné, pour fournir un signal de présence utilisé pour commuter la liaison du téléviseur, soit sur l'antenne, soit sur le modulateur.

La liaison du téléviseur avec le réseau de distribution a ainsi la priorité sur la liaison avec l'antenne, et le téléviseur ne peut capter une émission UHF que si un canal fantôme a été au préalable sélectionné sur le réseau.

Suivant une particularité dudit mode d'exécution, des moyens sont prévus pour constater que le terminal d'abonné est effectivement actif et que le récepteur de télévision correspondant est en service et, si ces deux conditions ne sont pas simultanément remplies, pour déconnecter l'abonné du réseau de distribution.

D'autres particularités, ainsi que les avantages de l'invention, apparaîtront clairement à la lumière de la description ci-après.

Au dessin annexé :

La figure 1 est un schéma synoptique général d'un réseau de distribution conforme à l'invention ;

La figure 2 est le schéma de principe d'un module individuel ;

La figure 3 représente plus en détail le récepteur de télécommande et les circuits logiques que comporte le module de la figure 2 ;

La figure 4 est le schéma d'un terminal d'abonné ;

La figure 5 représente un mode d'exécution préféré du détecteur de la présence effective d'un signal vidéo sur la ligne d'abonné ;

La figure 6 est le schéma d'un dispositif qui permet de s'assurer de la mise en service effective d'un récepteur de télévision ne comportant pas de prise de péritélévision ; et

La figure 7 est le schéma d'un module individuel à capacité d'adressage variable.

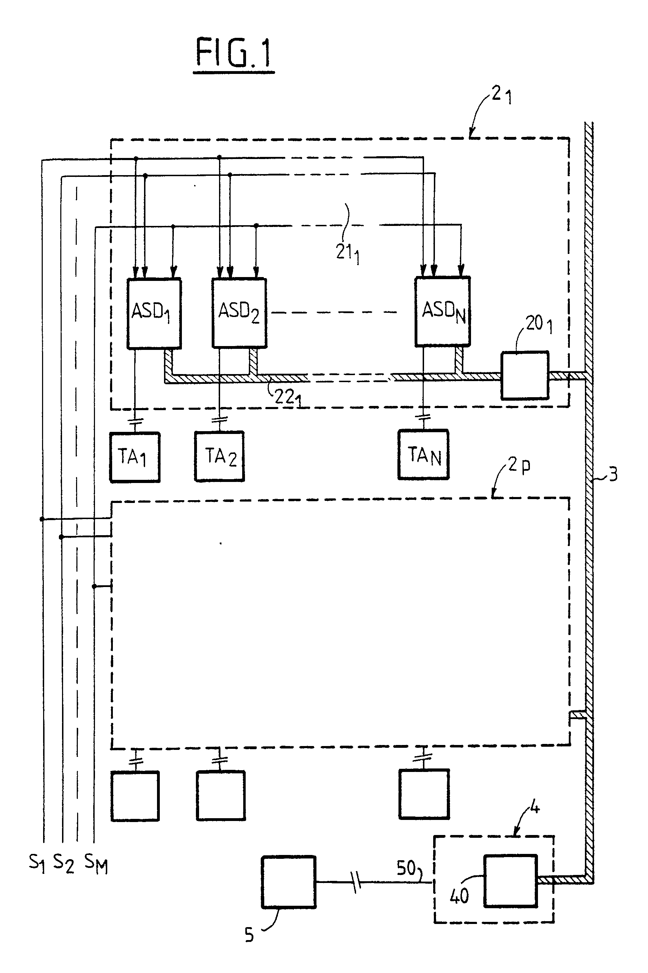

A la figure 1, on a représenté un bus vidéo 1 qui reçoit M sources de signaux $S_1$, $S_2$... $S_M$, par exemple seize, trente deux ou soixante quatre.

Sur le bus 1 sont branchés un certain nombre de tiroirs de distribution $2_1$... $2_p$ dont seul le tiroir $2_1$ a été représenté plus en détail, et dont chacun prend en charge la distribution des M sources vers un maximum de N abonnés (en pratique, N est de l'ordre de 40 à 50).

Un bus informatique 3 relie les tiroirs à un micro-ordinateur 4 grâce à des interfaces spécifiques $20_1$ dans le tiroir $2_1$ et 40 dans le micro-ordinateur. Il s'agit d'un bus bidirectionnel qui peut, sur ordre du micro-ordinateur, interroger les tiroirs pour savoir à laquelle de M sources est connecté chacun des N abonnés desservis par chaque tiroir, éventuellement interdire la connexion de tel abonné avec telle source (fonction contrôle d'accès), voire imposer la connexion de l'abonné à une certaine source. Ces opérations sont effectuées par le micro-ordinateur suivant le programme qui lui a été fourni à la mise en service, et suivant les instructions particulières que peut lui fournir en temps réel un centre 5 de gestion du centre de distribution 1, $2_1$... $2_p$, 3, 4.

Ce centre 5, relié à ce micro-ordinateur par une liaison télématique 50 permet également de communiquer avec chaque usager, ou avec leur ensemble, grâce à une messagerie vidéo.

Chaque tiroir de distribution est organisé autour d'un bus vidéo local, tel que $21_1$, qui recopie les signaux du bus vidéo général 1 après passage dans des amplificateurs d'isolement non représentés, et d'un bus local de contrôle, tel que $22_1$, relié au bus informatique général 3 par l'interface $20_1$.

Chacun des N terminaux d'abonnés $TA_1$, $TA_2$... $TA_N$ de chaque tiroir est relié au bus vidéo local correspondant $21_1$ par l'intermédiaire de modules individuels $ASD_1$, $ASD_2$... $ASD_N$ d'amplification et de sélection. Chaque terminal d'abonné, tel que $TA_1$, qui comporte un récepteur de télévision ou un moniteur, est relié au module correspondant par un câble vidéo et une ligne de télécommande symbolisés à la figure 1 par un trait unique. En outre, chacun des modules est relié au bus local de contrôle $22_1$.

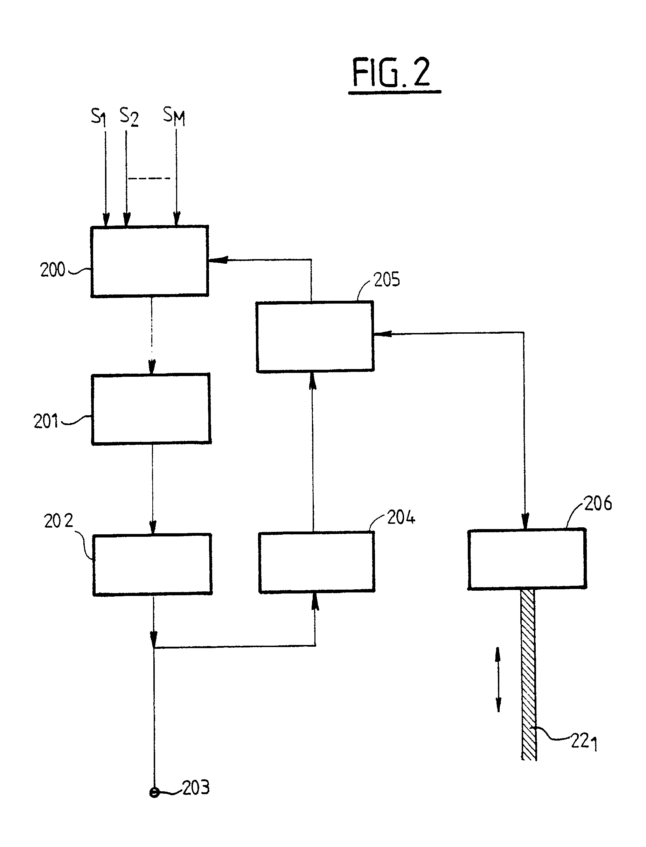

A la figure 2, on a représenté l'un des modules identiques $ASD_1$, $ASD_2$... $ASD_N$.

Il comporte un multiplexeur vidéo 200 à M entrées reliées au bus vidéo local $22_1$ et à une sortie reliée à un amplificateur de ligne 202 par l'intermédiaire d'un étage préamplificateur 201. Le préamplificateur comporte des circuits permettant d'effectuer une pré-correction des distorsions d'amplitude et de fréquence amenées par la liaison. L'étage de puissance 202 met dans le format adéquat le signal à transmettre, notamment pour alimenter symétriquement la ligne bifilaire ou câble coaxial qui constitue la ligne d'abonné 203.

Un dispositif de transmission des ordres de sélection est composé des blocs 204 et 205. Le bloc 204 est un circuit récepteur et décodeur du signal de télécommande de sélection de programme provenant du terminal d'abonné. Il est constitué de filtres passe-bande permettant la séparation par exemple des signaux de télécommande émis suivant la technique du multiplex en fréquence, sur une sous-porteuse située en dehors de la bande passante du signal vidéo de télévision.

Le bloc 205, relié à une entrée auxiliaire du multiplexeur 200, commande, à partir des signaux issus du bloc 204, la sélection d'une voie parmi M. Ce bloc 205 est un circuit logique qui présente en outre l'état de la demande de commutation à un interface logique 206 chargé de la transmettre au micro-ordinateur, via le bus local de contrôle $22_1$, l'interface $20_1$, le bus informatique 3 et l'interface 40.

Si rien ne s'oppose à l'accés de l'abonné au canal qu'il a choisi, la commande du multiplexeur est maintenue. Dans le cas contraire, le micro-ordinateur envoie une instruction (par le même canal, en sens inverse) au bloc logique 205, sous la forme d'un ordre de raccordement de l'abonné à une certaine source parmi les M présentes. Il peut s'agir d'un canal vide ou d'une source particulière engendrant un message pour l'abonné.

On notera que le micro-ordinateur n'assume aucun rôle dans la réalisation effective du choix de l'abonné. Il ne peut que contrecarrer éventuellement ce choix ; sa défaillance, voire son absence dans des configurations simplifiées de centres de distribution, n'auront pas pour effet d'empêcher la sélection normale des canaux par les usagers.

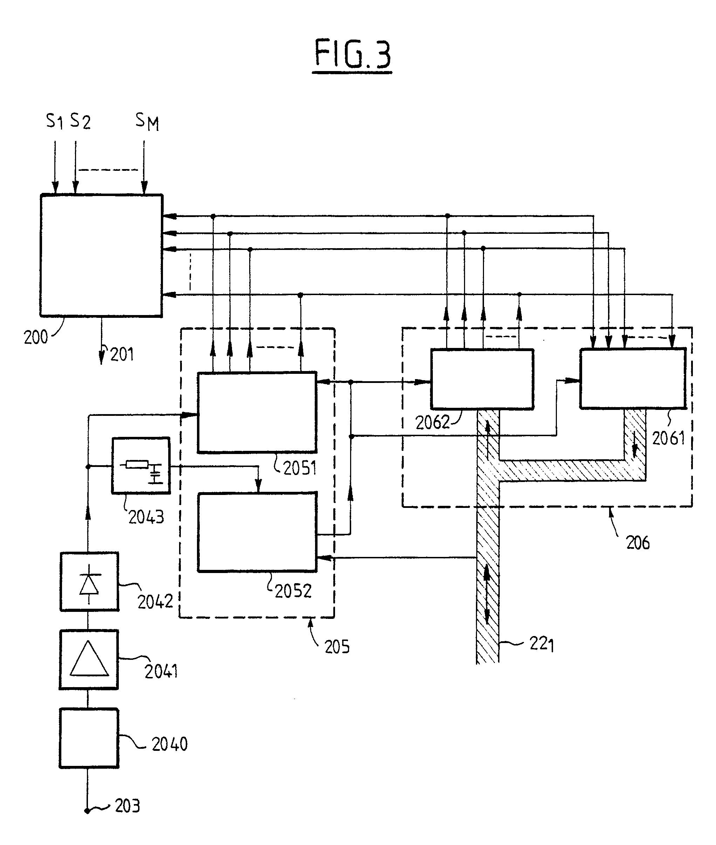

La figure 3 donne le détail des blocs 204, 205 et 206.

Le signal de télécommande issu du récepteur 204, composé des blocs 2040 à 2043 dont le fonctionnement sera expliqué dans la suite, se présente sous la forme d'un train d'impulsions codées (PCM) sur une ligne série. Un décodeur 2051 transforme ce train série en un mot digital parallèle qui, appliqué au multiplexeur 200, provoque le déblocage d'une des M entrées vidéo. La composition du mot parallèle est telle qu'elle permet l'identification d'au moins M états (par exemple, 4 bits pour 16 états distincts), avec quelques signaux auxiliaires de service, tels que "Horloge", "Activation", et autres.

Les registres de sortie du décodeur 2051 sont du type "3 états", ce qui permet de les rendre flottants sous l'action d'une commande auxiliaire.

Lorsque les registres sont actifs, leur état est appliqué au multiplexeur 200 pour effectuer la connexion voulue, ainsi qu'à un registre tampon 2061 qui le transfère aux lignes du bus local de contrôle 22₁, pour acheminement vers le micro-ordinateur opérant en mode "lecture".

Lorsque les registres sont inactifs, l'état du décodeur 2051 ne peut plus être transféré au multiplexeur. En revanche, les sorties d'un registre 2062 peuvent devenir actives, et présenter au multiplexeur le code correspondant à la voie vidéo imposée par le micro-ordinateur opérant en mode "écriture", via le bus local de contrôle 22₁. Ce dernier véhicule les signaux auxiliaires permettant de placer les registres 2061 et 2062 dans l'état convenable, par l'intermédiaire de circuits logiques 2052 également connectés au bus 22₁ par l'intermédiaire d'une liaison.

Le système est normalement en mode "lecture". Le décodeur 2051 est actif et actionne directement le multiplexeur 200. Le micro-ordinateur 4 effectue des cycles de lecture en plaçant sur le bus informatique 3 les adresses successives des abonnés du centre de distribution. Ces adresses sont codées sous forme de mots digitaux dont le nombre de bits peut décrire le nombre maximum d'abonnés raccordables au centre (par exemple 8 bits pour 256 usagers).

L'interface de chaque tiroir 2₁... 2ₚ contient les circuits de décodage permettant de reconnaître les codes relatifs aux ASD contenus dans ce tiroir, et de les envoyer sur le bus local de contrôle 22₁ pour reconnaissance par le module correspondant. Un signal complémentaire "Read" émis par le micro-ordinateur active alors le registre 2061 et place l'information sur le bus 22₁.

Un signal similaire "Write", envoyé dans les mêmes conditions, désactivera le décodeur 2051 au profit du registre d'écriture 2062, permettant à la commande présente sur le bus 22₁ d'être acheminée vers le multiplexeur 200, lorsque le système est en mode "écriture".

Dans une réalisation faisant appel à un micro-ordinateur du type "PC", il est évident que le champ d'adresses E/S n'est pas suffisant pour accéder directement à quelques centaines d'utilisateurs. On a alors recours à l'adressage indirect. On peut aussi utiliser le champ mémoire au prix d'une plus grande complexité de la circuiterie de décodage.

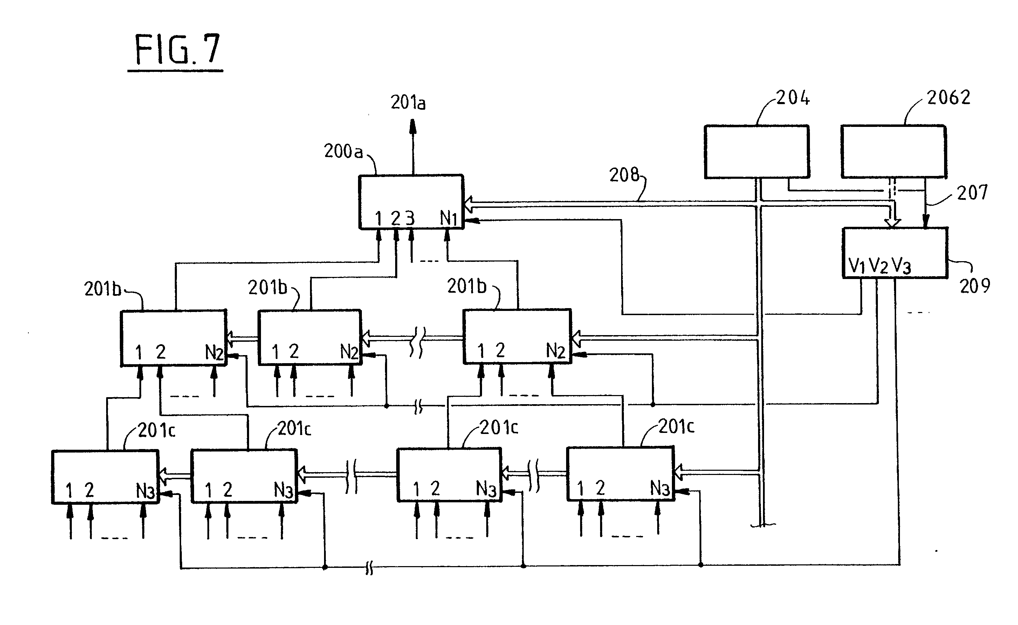

Une solution permettant l'extension du potentiel d'adressage sera décrite dans la suite en se référant à la figure 7.

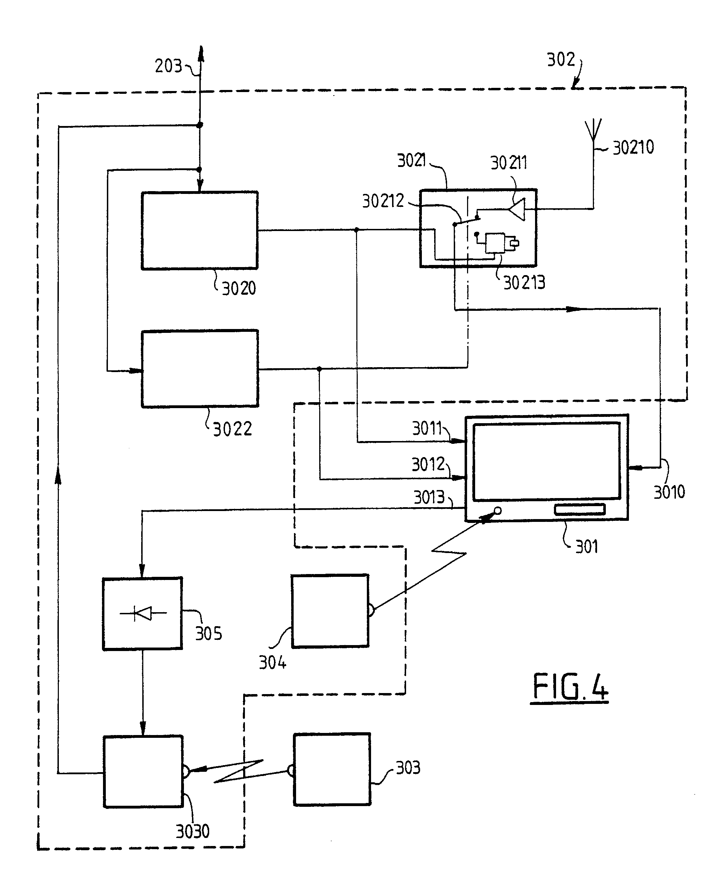

A la figure 4, on a représenté un exemple de réalisation d'un terminal d'abonné. Il comprend : un récepteur de télévision standard 301 connecté à un dispositif 302 par l'intermédiaire, soit de son entrée UHF 3010, soit d'une prise de péritélévision 3011-3012-3013 ; un dispositif 303 de télécommande à infra-rouge pour la sélection vidéo vers le centre de télédistribution par la ligne 203 d'abonné et un dispositif classique 304 de télécommande à infra-rouge servant à la sélection des programmes et au réglage du téléviseur.

Le dispositif 302 comprend un amplificateur de câble 3020 raccordé à la ligne d'abonné 203, un modulateur UHF/VHF 3021 et un détecteur 3022 de la présence effective d'un signal vidéo sur la ligne d'abonné 203.

Le modulateur 3021 est du type utilisé dans les magnétoscopes vidéo d'appartement pour relier ces derniers à l'antenne du téléviseur.

L'antenne 30210 est ici reliée au modulateur 30213 proprement dit par l'intermédiaire d'un amplificateur 30211 et d'un commutateur 30212 lui-même relié à l'entrée UHF/VHF du téléviseur et commandé par un signal de présence issu du détecteur 3022.

Lorsqu'un signal vidéo est effectivement présent sur la ligne 203, le commutateur 30212 est placé dans la position où il connecte la sortie du modulateur, qui reçoit le signal vidéo issu de l'amplificateur 3020, à l'entrée 3010 du téléviseur. Si aucun signal vidéo n'est présent, le commutateur est placé dans la position où il connecte directement l'antenne à l'entrée 3010 du téléviseur.

Le dispositif donne aussi la priorité aux émissions que l'usager à demandées au centre de distribution. On l'empêche ainsi de recevoir une émission UHF publique gratuite pendant qu'il est connecté en vidéo à un canal payant.

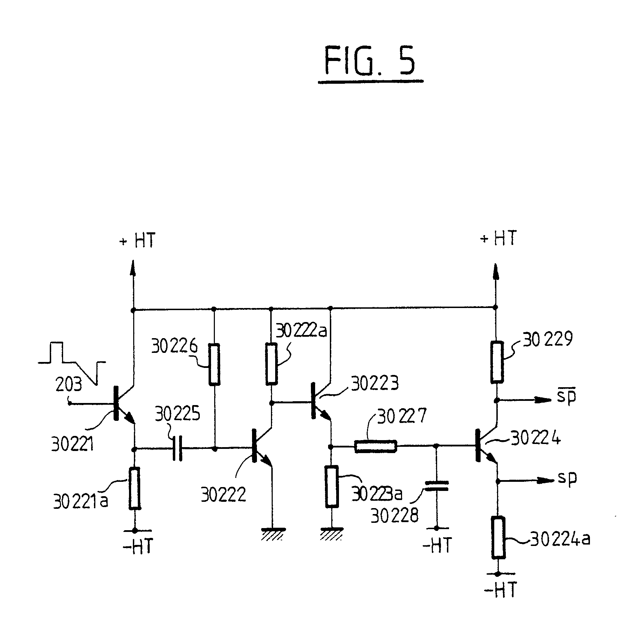

La figure 5 illustre un exemple de réalisation du bloc détecteur de présence 3022 de la figure 4.

Ce dispositif comprend quatre transistors 30221, 30222, 30223 et 30224 montés en émetteur-suiveur, respectivement alimentés à travers des résistances 30221a, 30222a, 30223a et 30224a.

Un signal vidéo de polarité négative, provenant de la ligne d'abonné 203, est appliqué sur la base du transistor 30211. Le montage constitué par le condensateur 30225, la résistance 30226 et le transistor 30222 aligne le niveau de référence des impulsions de synchronisation horizontale et verticale sur le seuil de conductibilité de la diode base-émetteur du transistor. Grâce à la constante de temps constituée par le condensateur 30225 et la résistance 30226, cet alignement est permanent pendant toute la durée de la ligne. L'impulsion de synchronisation se retrouve sur le collecteur du transistor 30222. Sa polarité est inversée par le transistor 30223 et elle est filtrée par le montage constitué de la résistance 30227, du condensateur 30228 et du transistor 30224, pour donner un signal sp de présence du signal vidéo sur l'émetteur, et un signal $\overline{sp}$ sur le collecteur.

Pour déconnecter un abonné du centre de distribution afin de lui permettre de capter une émission UHF, il suffit de le relier à un canal fantôme lequel, ne transmettant aucune impulsion de synchronisation, provoque la génération du signal $\overline{sp}$ par le dispositif de la figure 5.

On a représenté en 3030 un circuit de modulation, par le signal de télécommande de sélection, d'une sous-porteuse HF par exemple à 10 MHz (donc en dehors du spectre de fréquence des signaux vidéo à transmettre).

Suivant une particularité de l'invention, le modulateur fonctionne en modulation négative, si bien que la sous-porteuse est transmise en permanence et sert par sa présence à signaler au centre de distribution que le terminal d'abonné considéré est effectivement connecté et en fonctionnement.

Il faut en outre que le centre de distribution soit informé du fait que le récepteur de télévision 301 est effectivement sous tension.

Lorsque le récepteur comporte une prise de péritélévision (figure 4), celle-ci comporte une sortie vidéo 3013 qui permet normalement de transmettre un signal vidéo du téléviseur vers un périphérique extérieur.

Un détecteur 305 du niveau de ce signal fournit un signal de blocage du circuit 33 dans le cas où, le téléviseur n'étant pas en service, le signal vidéo présente une tension nulle.

La présence de la sous-porteuse à la sortie du circuit 33 indique donc que le terminal d'abonné et le téléviseur sont tous deux en service.

Cette sous-porteuse est transmise par la ligne d'abonné 203 au récepteur de télécommande 204, où elle est filtrée par un filtre 2040 (figure 3), amplifiée en 2041 et démodulée en 2042, d'une part pour constituer le signal de télécommande appliqué au décodeur 2051, d'autre part, après filtrage basse fréquence dans un filtre 2043, pour fournir un signal "terminal actif" au bloc logique auxiliaire 2052.

Lorsque ce signal "terminal actif" est à l'état faux, le centre de gestion déconnecte l'usager en le branchant sur le canal fantôme, comme on l'a expliqué ci-dessus.

Grâce à cette disposition, le centre de gestion ne facturera pas de temps de connexion à des abonnés dont l'équipement est hors service pour une cause quelconque (arrêt, défaillance, erreur de manipulation). On notera qu'un tel système offre une grande fiabilité vis-à-vis des perturbations introduites intentionnellement, du fait que l'arrêt de la facturation se fait simultanément à la connexion sur le canal fantôme.

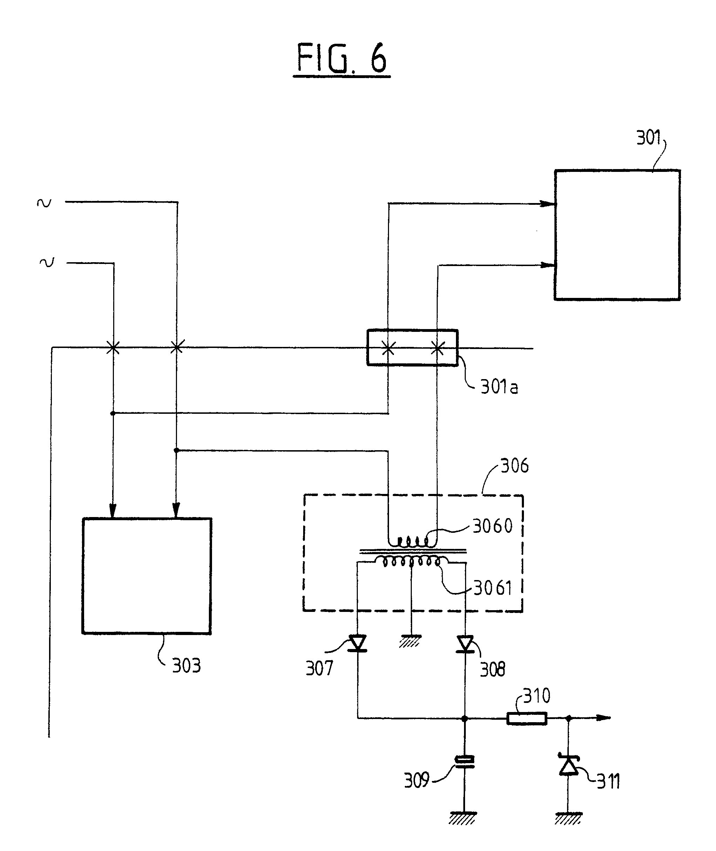

Dans le cas où le téléviseur ne comporte pas de prise de péritélévision, le dispositif de la figure 6 se substitue au dispositif 305 de la figure 4 pour fournir un signal de blocage du circuit 3030 dans le cas où le téléviseur n'est pas en service.

Le secteur de distribution qui alimente le terminal d'abonné 302 fournit l'alimentation au téléviseur 301 par l'intermédiaire d'une prise de secteur standard supplémentaire 301 a , elle-même reliée au secteur à travers l'enroulement primaire 3060 d'un transformateur de courant 306 en série avec l'un des fils d'alimentation du secteur.

La tension aux bornes de l'enroulement secondaire 3061 est redressée, filtrée et limitée par un montage comportant des diodes 307, 308, un condensateur 309, une résistance 310 et une diode de Zener 311, pour fournir le signal qui bloquera ou non le circuit 3030 de la figure 4.

Il doit être bien compris que les dispositifs permettant de constater que le terminal d'abonné et le récepteur de télévision correspondant sont simultanément en service, pour déconnecter l'abonné du centre de distribution lorsque ces deux conditions ne sont pas simultanément remplies, tels qu'illustrés par les figures 4 à 6, pourraient être utilisés dans tout autre type de réseau dans lequel chaque terminal d'abonné a accès à une pluralité de sources de signaux auxquelles il peut se relier au moyen d'ordres de sélection transmis à distance.

La logique de commande devra évidemment être adaptée à chaque type de réseau.

La réalisation pratique des différents blocs représentés au dessin est à la portée de l'homme du métier.

Le module de base représenté à la figure 2 peut être réalisé sous la forme d'une carte de circuits imprimés ou constituer une partie de carte ou de circuit intégré réalisé pour cet usage.

Chaque tiroir (tel que $2_1$, figure 1) peut être constitué par un bac standard (bac 19 pouces selon les normes européennes) contenant en outre les amplificateurs vidéo ou numériques toujours nécessaires au bus vidéo local $21_1$ et au bus informatique, ainsi que des dispositifs d'alimentation, non figurés. Il constitue un ensemble compact, fiable et de maintenance aisée, avec pour seule connectique, les connecteurs pour M signaux vidéo d'entrée et pour N câbles d'abonnés.

Le micro-ordinateur 4 est avantageusement un compatible PC sur l'espace entrées/sorties duquel on réserve par exemple 8 à 16 adresses pour le réseau de distribution, ce qui permet de gérer 8 tiroirs totalisant plus de 400 utilisateurs. On peut aussi utiliser des adresses dans le champ mémoire, ce qui permet l'accès direct à un seul cycle lecture ou écriture.

Dans ce champ d'adresses, les données transmises sur une adresse paire (0, 2, 4,...) représentent le numéro (ou l'adresse) de l'utilisateur, dans une numérotation sur 8 bits, soit 256 utilisateurs. Les données transmises sur les adresses impaires (1, 3, 5,...) représentent les données destinées au dispositif de sélection de cet utilisateur, en l'occurrence le numéro de la source vidéo. Un message complet comporte 16 bits, l'adresse de l'utilisateur ainsi que la source à laquelle il doit être connecté.

A la figure 7, on a représenté un multiplexeur $200_a$ comportant des entrées de canaux 1, 2, 3... $N_1$ et une sortie $201_a$ reliée à l'utilisateur de la manière qui a été décrite en se référant aux figures 2 et 3.

Les organes de commande de sélection ont été représentés de manière simplifiée, sous la forme d'un récepteur de télécommande 204 et d'un registre de réception 2062 qui permet le fonctionnement en mode écriture.

Ces deux organes délivrent un message d'ordre de sélection comprenant un mot de 5 bits, correspondant à 32 combinaisons distinctes, ainsi qu'un signal de validation (liaison 207) qui permet au multiplexeur de savoir à quel moment les informations numériques qui lui sont présentées sur le bus 208 sont à prendre en compte.

Le multiplexeur possède des circuits de mémorisation qui maintiennent sa liaison avec l'une de ses voies d'entrée pendant la durée des changements d'états des organes de commande 204 ou 2062 et permettent la mise à jour du contenu de ses circuits de mémorisation, pour un état déterminé du signal de validation, lorsque le changement d'état est effectué. Le retour du signal de validation à son état initial verrouille les circuits de mémorisation sur le contenu mis à jour.

Une ou plusieurs entrées de canaux du multiplexeur $201_a$ sont réunies chacune à la sortie de l'un des multiplexeurs $201_b$ d'un groupe de multiplexeurs ayant chacun des entrées 1, 2... $N_2$.

Une ou plusieurs entrées de canaux de chacun des multiplexeurs $201_b$ sont elles-mêmes réunies chacune à la sortie de l'un des multiplexeurs d'un groupe de multiplexeurs ayant chacun des entrées 1, 2... $N_3$.

Les entrées de commande de ces multiplexeurs sont alimentées en parallèle par les organes 204 ou 2062.

Pour les entrées de canaux à accès direct du multiplexeur $200_a$ (telle que 3), le message d'ordre de sélection transmis sur le bus 208 provoque immédiatement la sélection du canal correspondant.

Par contre, lorsqu'un ordre de sélection correspondant à l'une des entrées de canaux reliées aux multiplexeurs du groupe $201_b$ est reçu par le multiplexeur $200_a$, cet ordre de sélection comprend une première instruction, qui définit le numéro de cette entrée et positionne le multiplexeur $200_a$ sur le canal correspondant.

Un décodeur logique 209 relié au bus 208 et à la liaison 207, comporte autant de sorties de validation $V_1$, $V_2$, $V_3$ qu'il y a de groupes de multiplexeurs. Lorsqu'il a détecté la présence d'un ordre de sélection, dès que le multiplexeur $200_a$ s'est positionné sur le canal correspondant, il lui applique un signal de validation $V_1$ qui a pour effet de le verrouiller sur le canal considéré et d'isoler son entrée de validation.

Les multiplexeurs des groupes $201_b$ et $201_c$ ne recevant pas de signal de validation, conservent leur état précédent.

L'ordre de sélection comprend une seconde instruction, à l'arrivée de laquelle le signal de validation $V_2$ déverrouille les multiplexeurs du groupe $201_b$ : il en résulte que ceux-ci se positionnent alors sur celle des entrées de canaux 1, 2... $N_2$ qui est définie par la seconde instruction.

De même, une troisième instruction permettra le positionnement des multiplexeurs du groupe $201_c$ sur celle des entrées de canaux qui est définie par elle.

En définitive, le dispositif permet de sélectionner un canal parmi $N_1$ x $N_2$ x $N_3$ (si aucune entrée de canal n'est à accès direct).

A titre d'exemple, pour $N_1$ = $N_2$ = $N_3$ = 32, la sélection d'un canal parmi 32.768 est possible.

On pourra évidemment, pour obtenir une extension plus grande de la capacité d'adressage, ajouter autant de niveaux successifs de multiplexeurs que cela sera nécessaire.

L'extension n'exige aucune augmentation de la capacité d'adressage des émetteurs de télécommande et aucune modification des circuits des modules.

En pratique, il sera intéressant d'affecter à des entrées à accès direct des sources accessibles à tous les usagers et de réserver les canaux à accès indirect à des familles de sources réservées à certaines catégories d'usagers.

## Revendications

1. Réseau de distribution de signaux vidéo et/ou audio en provenance d'une première pluralité de sources vers une seconde pluralité d'usagers, dans lequel la sélection d'une source par un usager est effectuée au moyen d'un dispositif de sélection sur lequel l'usager agit à distance au moyen d'un dispositif de transmission d'ordres de sélection dont il dispose, chaque usager étant relié audit dispositif de sélection par l'intermédiaire d'un amplificateur de ligne, caractérisé en ce que la liaison entre les sources de signaux et chaque usager s'effectue par l'intermédiaire d'un module individuel indépendant dans son fonctionnement des modules individuels des autres usagers et comprenant à la fois : ledit dispositif de sélection, constitué par un multiplexeur vidéo (200) dont les entrées respectives sont reliées aux sources respectives (S₁, S₂... S_M) et dont la sortie unique est reliée à l'amplificateur de ligne correspondant (202) ; ledit amplificateur de ligne (202) ; et un dispositif (204) de réception des ordres de sélection.

2. Réseau de distribution selon la revendication 1, caractérisé en ce que chacun desdits modules individuels comporte en outre un circuit logique de commande de sélection (205) relié audit dispositif de réception (204) et à un bus local (22₁) de contrôle de l'accès des sources par les différents abonnés, ledit bus local étant lui-même relié à un bus informatique (3).

3. Réseau de distribution selon la revendication 2, caractérisé en ce que ledit circuit logique de commande de sélection (205) comprend un décodeur (2051) du train d'impulsions codées qui constitue le signal de commande qu'il transforme en mot digital parallèle appliqué au multiplexeur, ledit décodeur ayant des registres de sortie agencés pour être rendus inactifs par une commande auxiliaire, de façon à pouvoir alors recevoir un code de sélection imposé sur le bus local de contrôle (22₁) par un micro-ordinateur (4) relié au bus informatique.

4. Réseau de distribution selon l'une des revendications 1 à 3,
caractérisé en ce que l'ensemble des modules du réseau est réparti en une pluralité de sous-ensembles en parallèle sur un bus de distribution général (1), chaque sous-ensemble contenant en outre un bus vidéo local, les amplificateurs tampons nécessaires aux différents bus et les circuits d'alimentation du sous-ensemble.

5. Réseau de distribution conforme à la revendication 3,
caractérisé en ce que chacun desdits modules comporte en outre un interface logique (206) entre, d'une part le bus local de contrôle (22₁) et d'autre part, le dispositif de sélection (200) et la logique de commande de sélection (205), ledit interface logique comprenant un registre (2061) de lecture des états du dispositif de sélection et un registre (2062) d'écriture dudit code de sélection imposé.

6. Réseau de distribution conforme à la revendication 1, dans lequel le terminal d'abonné comprend un récepteur de télévision standard (301) associé à un modulateur UHF/VHF (3021) reliable à l'antenne (30210) dudit récepteur, caractérisé en ce que ledit modulateur est en outre relié en permanence à l'amplificateur de ligne (3020) et ledit terminal comprend des moyens (3022) de détecter la présence effective d'un signal vidéo sur la ligne d'abonné (203), pour fournir un signal de présence (sp, $\overline{sp}$) utilisé pour commuter la liaison du téléviseur, soit sur l'antenne, soit sur le modulateur.

7. Réseau de distribution selon la revendication 6, caractérisé en ce qu'il comporte en outre des moyens de constater que le terminal d'abonné est effectivement actif et que le récepteur de télévision correspondant est en service et, si ces deux conditions ne sont pas simultanément remplies, pour déconnecter l'abonné du réseau de distribution.

8. Réseau de distribution selon la revendication 6, caractérisé en ce que lesdits moyens (3022) détectent les impulsions de synchronisation du signal vidéo et les intègrent pour fournir un signal de présence permanent pendant la réception d'une source.

9. Réseau de distribution selon la revendication 7, caractérisé en ce que lesdits moyens (303-3070) de constater que le terminal d'abonné est actif utilisent la sous-porteuse HF qui véhicule le signal de commande de sélection des sources, ledit signal effectuant une modulation négative de ladite sous-porteuse.

10. Réseau de distribution selon les revendications 7 et 9,
caractérisé en ce que lesdits moyens (305-3030) de constater que le récepteur de télévision est en service utilisent la sortie vidéo d'une prise de péritélévision dont est muni ledit récepteur et, lorsque la tension est nulle sur ladite sortie vidéo, bloquent la transmission de ladite sousporteuse au niveau du modulateur (303) à modulation négative.

11. Réseau de distribution selon la revendication 7, caractérisé en ce que lesdits moyens de constater que le récepteur de télévision est en service utilisent un dispositif (306 à 311) détecteur du courant d'alimentation du récepteur de télévision.

12. Réseau de distribution selon la revendication 1, caractérisé en ce que ledit multiplexeur vidéo (200) comprend deux ou plusieurs étages en cascade (200_a, 201_b, 201_c) et au moins certaines des entrées de canaux du multiplexeur, d'un étage déterminé, sont chacune reliées aux sorties de plusieurs multiplexeurs de l'étage suivant, les entrées de commande des multiplexeurs des différents étages étant alimentées en ordres de sélection comprenant deux ou plusieurs instructions qui définissent les différents étages.

# FIG.1

# FIG.2

EP 0 409 702 A1

FIG.3

FIG.4

# FIG. 5

# FIG. 6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 202 303 (DELTAKABEL B.V.) <br> * Page 4, ligne 23 - page 6, ligne 29 * <br> --- | 1 | H 04 N 7/173 <br> H 04 N 7/16 |
| A | US-A-3 639 686 (WALKER et al.) <br> * Colonne 3, lignes 45-51 * <br> --- | 3 | |
| A | US-A-3 947 624 (MIYAKE) <br> * Colonne 2, ligne 64 - colonne 5, ligne 31 * <br> ----- | 6 | |

**DOMAINES TECHNIQUES RECHERCHES (Int. Cl.5)**

H 04 N 7/00

Le présent rapport a été établi pour toutes les revendications

| Lieu de la recherche | Date d'achèvement de la recherche | Examinateur |
|---|---|---|
| LA HAYE | 17-10-1990 | HAZEL J.F. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
................................................................
& : membre de la même famille, document correspondant

EPO FORM 1503 03.82 (P0402)